# EUROPÄISCHE PATENTSCHRIFT

(11) **EP 2 655 164 B1**
(45) Veröffentlichungstag und Bekanntmachung des Hinweises auf die Patenterteilung: **29.04.2015**
(21) Anmeldenummer: 11801596.5
(22) Anmeldetag: 07.12.2011
(51) Int. Cl.: B62D 5/06, B23P 11/02, B62D 5/083

(54) **VERFAHREN ZUR SPANLOSEN VERBINDUNG DER RITZEL- ODER EINGANGSWELLE MIT DEM DREHSTAB EINER SERVOLENKUNG**
METHOD FOR THE CHIP-FREE CONNECTION OF THE PINION OR INPUT SHAFT TO THE TORSION BAR OF A SERVO STEERING SYSTEM
PROCÉDÉ POUR L'ASSEMBLAGE SANS ENLÈVEMENT DE COPEAUX DE L'ARBRE DE PIGNON OU ARBRE D'ENTRÉE AVEC LA BARRE DE TORSION D'UNE SERVODIRECTION

(30) Priorität: 21.12.2010 DE 102010055298
(43) Veröffentlichungstag der Anmeldung: 30.10.2013
(73) Patentinhaber: ThyssenKrupp Presta AG, 9492 Eschen (LI)
(72) Erfinder: HECK, Hubert, 40629 Düsseldorf (DE)
(74) Vertreter: Lenzing Gerber Stute
(86) Internationale Anmeldenummer: PCT/EP2011/006145
(87) Internationale Veröffentlichungsnummer: WO 2012/084133

(56) Entgegenhaltungen:
- WO-A1-2006/048392
- DE-A1-102008 064 456
- US-B1- 6 260 858

## Beschreibung

Die vorliegende Erfindung betrifft ein Verfahren mit den Merkmalen des Oberbegriffs des Anspruchs 1.

Drehschieberventile für Servolenkungen bei Kraftfahrzeugen umfassen üblicherweise unter anderem eine Steuerbüchse, in der drehbar der Drehschieber mit seinen Steuernuten angeordnet ist. In dem Drehschieber wiederum ist ein Drehstab eingesetzt, der an dem lenksäulenseitigen Ende des Drehschiebers drehfest mit diesem verbunden und an dem gegenüberliegenden Ende in einem Nadellager drehbar gelagert ist. Die gesamte Anordnung ist in etwa rotationssymmetrisch um die gemeinsame Drehachse. Der Drehstab erlaubt ein gewisses Verdrehen zwischen der Lenksäule, genauer gesagt der Lenkspindel und dem Antriebsritzel des Lenkgetriebes. Da der Drehschieber nur an dem eingangsseitigen Ende des Drehstabes drehfest befestigt ist, bewirkt diese Verdrehung eine Lageänderung der Steuernuten des Drehschiebers gegenüber der Steuerbüchse und damit ein hydraulisches Steuersignal, das letztendlich zur Betätigung der Servounterstützung führt.

Bei elektromechanischen Servolenkungen ist ein ähnlicher Aufbau mit einem Drehstab als Verbindung von Eingangswelle und Ritzelwelle vorgesehen, wobei die Torsion im Betrieb nicht zur hydraulischen Steuerung sondern als mechanischer Eingangswert für einen Drehmomentsensor genutzt wird.

Die Befestigung des Drehstabes in der Eingangswelle erfolgt üblicherweise in einem Schaftabschnitt des Drehstabes. In der Nähe dieses Bereichs wird eine radiale, die Eingangswelle und den Drehstab mittig durchsetzende Bohrung eingebracht und die beiden Bauelemente werden durch diese Durchgangsbohrung hindurch miteinander verstiftet. Das Einbringen dieser Durchgangsbohrung durch die beiden Bauelemente hindurch ist in der Praxis nicht problemlos, weil das zu verwendende Material recht hart ist. Außerdem müssen während des Bohrvorgangs entstehende Späne sowie die dabei entstehende Wärme abgeführt werden. Schließlich ist die erzielte Verbindung nicht dicht. Es muss also für eine zusätzliche Abdichtung, beispielsweise in Gestalt eines O-Rings, Sorge getragen werden.

Speziell bei der Anwendung bei elektromechanischen Servolenkungen muss der Verbindungsbereich auch möglichst vollkommen fettfrei sein, was nach der spanenden Fertigung schwierig zu erzielen ist.

Eine weitere Verbindungstechnik für Drehschieberventile von Servolenkungen sieht vor, dass der Schaftabschnitt des Drehstabes mit einer koaxialen Sackbohrung versehen wird, in die dann in der Befestigungsposition eine Kugel eingepresst oder eingeschlagen wird. Die Kugel weist einen geringfügig größeren Durchmesser auf als der Innendurchmesser der Sackbohrung, so dass der Schaftabschnitt des Drehstabes erweitert und damit in der Bohrung des Drehschiebers befestigt wird. Diese Befestigungstechnik führt zu erheblichen Axialkräften auf den Drehstab, dessen Federabschnitt hierdurch beeinträchtigt werden kann. Es ergeben sich Nachteile für die Präzision, mit der beispielsweise die kräftefreie hydraulische Mittellage des Ventils justiert werden kann.

Aus der Offenlegungsschrift DE 44 41 165 A1 ist ein Servoventil bekannt, bei dem im Verbindungsbereich des Drehschiebers mit dem Drehstab der Drehschieber eine Innenkontur mit spiraligen Flächen und der Drehstab eine entsprechende Außenkontur aufweisen. Die Verbindung wird kraftschlüssig durch Verdrehen der Teile gegen einander hergestellt. Diese Verbindung kann nicht in jeder beliebigen Relativposition zwischen den Bauteilen hergestellt werden.

Aus der DE 197 52 468 A1 eine Verbindungstechnik bekannt, bei der mit einem Expanderelement der Drehstab von innen her aufgeweitet wird und so in dem Drehschieber fixiert wird. Hierbei entstehen durch das zusätzliche Befestigungselement weitere Kosten.

Ein Verfahren, bei dem der Drehstab in einem Längspresssitz spanlos in die Bohrung eingesetzt wird, zeigt das Dokument WO 2006/048392 A1.

Schließlich ist aus der DE10010837A1 bekannt, die Bohrung des Drehschiebers mit einem unrunden Querschnitt auszuführen, der unter Einwirkung einer von außen wirkenden Spannkraft zu einem im wesentlichen runden Querschnitt verformbar ist. Unter Einwirkung einer von außen wirkenden Spannkraft werden die Querschnitte der Bohrung und des Drehstabs so weit geometrisch ähnlich, dass der Drehstab frei in die Bohrung einführbar ist. Nach Wegnahme der Spannkraft wird der Drehstab reibschlüssig in der sich zurück verformenden Bohrung gespannt. Die Anfertigung der unrunden Bohrung ist in der Praxis aufwändig.

Es ist deshalb Aufgabe der vorliegenden Erfindung, ein Verfahren zur Verbindung einer Eingangswelle oder einer Ritzelwelle mit einem Drehstab zu schaffen, das ohne spanende Bearbeitung einfach und kostengünstig auszuführen ist.

Diese Aufgabe wird von einem Fertigungsverfahren mit den Merkmalen des Anspruchs 1 gelöst.

Weil bei der Fertigung der Eingangswelle und/oder der Ritzelwelle folgende Schritte vorgesehen sind:
- Fertigung der Eingangswelle und/oder der Ritzelwelle mit einer Bohrung, die zur Verbindung mit dem Drehstab vorgesehenen ist,
- wobei die Bohrung mit einem Untermaß gegenüber dem Außendurchmesser des Drehstabs angefertigt wird,
- wobei das Untermaß so gewählt ist, das der Drehstab bei Erhitzung der Eingangswelle und/oder der Ritzelwelle oder bei Abkühlung des Drehstabs in die Bohrung einführbar ist und nach dem Temperaturausgleich zwischen der Eingangswelle und/oder der Ritzelwelle und dem Drehstab der Drehstab mit einer Presspassung in der Bohrung sitzt;
- Erzeugen eines Temperaturunterschiedes, wobei der Drehstab kälter ist als die Eingangswelle und/oder die Ritzelwelle,
- Fügen der Eingangswelle und/oder der Ritzelwelle und des Drehstabs, sowie
- Herbeiführen eines Temperaturausgleichs zwischen der Eingangswelle und/oder der Ritzelwelle und dem Drehstab durch aktives Abkühlen oder Erwärmen oder durch Warten,
und weil insbesondere die zur Verbindung mit dem Drehstab vorgesehene Bohrung mit einem Untermaß gegenüber dem Außendurchmesser des Drehstabs angefertigt wird, wobei das Untermaß so gewählt ist, das der Drehstab bei Erhitzung der Eingangswelle und/oder der Ritzelwelle in die Bohrung einführbar ist und nach dem Abkühlen der Eingangswelle und/oder der Ritzelwelle der Drehstab mit einer Presspassung in der Bohrung sitzt, kann das Fügen der Eingangswelle und/oder der Ritzelwelle und des Drehstabs ohne sparende Bearbeitung erfolgen.

Die Bohrung der Eingangswelle und/oder der Ritzelwelle kann eine einfache kreisrunde Bohrung sein. Ebenso kann der zur Befestigung mit der Eingangswelle und/oder der Ritzelwelle vorgesehene Endbereich des Drehstabs einen zylindrischen, kreisrunden Querschnitt aufweisen. Die Orientierung des Drehstabs gegenüber der Eingangswelle ist nicht festgelegt. So kann die Baugruppe vor dem Abkühlen der Eingangswelle noch justiert werden, was zur Einstellung einer Mittellage dieser Baugruppe vorteilhaft ist. Schließlich ist die nach dem Abkühlen der Eingangswelle erzielte Verbindung ohne zusätzliche Dichtungsmaßnahmen gasdicht.

Die Verbindung zwischen Eingangswelle und/oder der Ritzelwelle und Drehstab kann im Durchmesser kleiner gestaltet werden als im Stand der Technik, da keine mechanische Bearbeitung beim Zusammensetzen erforderlich ist. Dadurch kann als Drehstab ein einfacher Stab eingesetzt werden, ohne dass der Durchmesser in den Endbereichen vergrößert ist. Das entsprechende Bauteil wird dadurch kleiner, leichter und preiswerter. Eine Einstellung der Federrate kann über die Wahl der Länge des Drehstabs erfolgen, so dass für mehrere verschiedene Drehstäbe das gleiche Material verwendet werden kann.

Entsprechend kann auch die Verbindung zwischen dem Drehstab und der Ritzelwelle hergestellt werden.

Die Temperaturdifferenz zwischen der Eingangswelle oder der Ritzelwelle und dem Drehstab soll bei der Fertigung etwa 200 bis 300°C betragen, wobei es möglich ist, die Eingangswelle oder die Ritzelwelle beispielsweise induktiv zu erhitzen. Es ist ebenso möglich, den Drehstab beispielsweise durch Anwendung von flüssigem Stickstoff abzukühlen.

In einer bevorzugten Ausführungsform ist die Bohrung zur Befestigung des Drehstabs in der Eingangswelle als Sackbohrung ausgeführt, so dass sich mit absoluter Sicherheit in diesem Bereich eine Gasdichtigkeit erzielen lässt.

Das insoweit beschriebene Verfahren ist besonders vorteilhaft, wenn vor dem Verbinden zusätzlich vorgesehen ist, die Anordnung je nach Bauart der Servolenkung auf eine hydraulische oder elektrische Mittellage zu justieren.

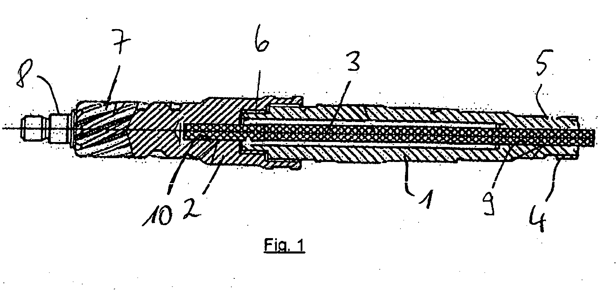

Im folgenden wird ein Ausführungsbeispiel der vorliegenden Erfindung anhand der Zeichnung erläutert. Es zeigt
- Figur 1:: eine Eingangswelle mit einem Drehstab sowie eine Ritzelwelle für eine Kraftfahrzeugservolenkung in einem Querschnitt von der Seite.

In der Figur 1 ist eine zweite Baugruppe mit einer Eingangswelle 1, einer Ritzelwelle 2 und einem Drehstab 3 in einem Längsschnitt dargestellt. Die Baugruppe kann für eine hydraulische Servolenkung oder eine elektromechanische Servolenkung vorgesehen sein. Die Eingangswelle 1 weist einen Anschluss 4 für eine Lenkwelle auf. Der Anschluss 4 ist als Vielzahn an einem Endbereich 5 der Eingangswelle 1 ausgebildet. Ein Lager 6 lagert die Eingangswelle 1 drehbar in der Ritzelwelle 2. Im Bereich des Lagers 6 ist die Eingangswelle 1 in die Ritzelwelle 2 eingeführt. Die Ritzelwelle 2 weist weiter eine Verzahnung 7 auf, mit der im Betrieb des Kraftfahrzeugs eine nicht dargestellte Zahnstange eines Lenkgetriebes angetrieben wird. Weiter ist die Ritzelwelle 2 an ihrem freien Ende mit einem Lagersitz 8 versehen, mit dem die Ritzelwelle 2 in einem Getriebegehäuse gelagert ist.

Die Eingangswelle 1 und die Ritzelwelle 2 sind im wesentlichen rotationssymmetrisch ausgebildet und koaxial zueinander angeordnet.

Die Eingangswelle 1 weist in ihrem Endbereich 5 eine konzentrische, achsparallele Durchgangsbohrung 9 auf. In die Durchgangsbohrung 9 ist der Drehstab 3 eingesetzt. In entsprechender Weise weist die Ritzelwelle 2 eine Sackbohrung 10 auf, in die der Drehstab 3 mit seinem zweiten Ende eingesetzt ist. Der Drehstab 3 ist bei diesem Ausführungsbeispiel ein Törsionsstab mit konstantem Querschnitt über seine Länge. In anderen, nicht dargestellten Ausführungsbeispielen kann ein konventioneller Drehstab verwendet werden, bei dem die Endbereiche zur Befestigung in der Eingangswelle und der Ritzelwelle gegenüber dem mittleren Torsionsbereich dicker ausgeführt sind.

Die Durchgangsbohrung 9 der Eingangswelle 1 und in diesem Beispiel auch die Sackbohrung 10 der Ritzelwelle 2 sind mit einem Untermaß gegenüber dem Außendurchmesser des Drehstabs 3 ausgeführt. Das Untermaß ist so gewählt, dass der Drehstab 3 in die Bohrung 9 und die Sackbohrung 10 eingeführt werden kann, wenn eine Temperaturdifferenz von etwa 200 bis 300°C zwischem dem Drehstab 3 und der Eingangswelle 1 sowie der Ritzelwelle 2 besteht. Nach dem Abkühlen der Eingangswelle 1 und der Ritzelwelle 2 ist der Durchmesser der Bohrungen 9 und 10 soweit reduziert, dass der Drehstab 3 mit einer Presspassung in den Bohrungen 9 und 10 fest sitzt.

Bei der Fertigung werden zunächst die einzelnen Bauteile gefertigt, entgratet und gereinigt. Vor der Montage der Baugruppe kann eine Reinigung der Eingangswelle 1 und der Ritzelwelle 2 noch so durchgeführt werden, dass ein nahezu vollständig fettfreier Zustand erzielt werden kann. Dann wird bei diesem Ausführungsbeispiel die Ritzelwelle 2 induktiv auf etwa 300°C erhitzt und der Drehstab 3, der nicht erhitzt wurde, in die Bohrung 10 eingeführt. Die Ritzelwelle 2 kann dann abkühlen, wodurch sich der Innendurchmesser der Bohrung 10 reduziert und der Drehstab 3 mit einer Presspassung darin sitzt. Danach wird das Lager 6 auf die Eingangswelle 1 aufgesetzt. Der Bereich der Bohrung 9 der Eingangswelle 1 wird wiederum induktiv auf etwa 300°C erhitzt und dann die Eingangswelle 1 über den Drehstab 3 geführt, bis das Lager 6 an dem vorgesehenen Sitz in der Eingangswelle 2 positioniert ist. Der Drehstab 3 ist dann in der Durchgangsbohrung 9 der Eingangswelle 1 an der vorgesehenen Position. Beim folgenden Abkühlen der Eingangswelle 1 reduziert sich auch der Durchmesser der Bohrung 9 derart, dass der Drehstab 3 mit Presspassung in der Bohrung 9 sitzt. Die Baugruppe ist damit zusammengefügt.

Vor dem Abkühlen der Eingangswelle 1 kann der relative Drehwinkel der Eingangswelle 1 zu der Ritzelwelle 2 noch eingestellt werden. Diese Einstellung ist bei hydraulischen Drehschieberventilen, die die Baugruppe nach Figur 1 enthalten können, als hydraulisches Balancieren bekannt. Bei elektrischen Servolenkungen ist die Baugruppe als Teil eines Drehmomentsensors ausgebildet und hier kann die Nulllage des Drehmomentsensors eingestellt werden, so lange die Eingangswelle 1 noch erhitzt ist.

Wie oben dargestellt wurde, kann die Bohrung 9 auch als Sackbohrung ausgeführt sein. Das Fügen des Drehstabs 3 in den Bohrungen 9 und 10 kann auch durch Abkühlen des Drehstabs, beispielsweise auf die Temperatur des flüssigen Stickstoffs, erfolgen. Es kann auch vorgesehen sein, die Fixierung des Drehstabs 3 in der Ritzelwelle 2 auf herkömmlicher Weise vorzunehmen.

Insgesamt ergibt sich ein Fertigungsverfahren, bei dem der Drehstab ohne spanende Bearbeitung in die Eingangswelle eingesetzt werden kann. Zusätzliche Verbindungselemente sind nicht erforderlich. Außerdem ergibt sich eine zwangsläufige Abdichtung des Innenbereichs gegenüber dem Außenbereich.

## Patentansprüche

1. Verfahren zur Herstellung einer Baugruppe für eine Kraftfahrzeugservolenkung aus Eingangswelle und Ritzelwelle mit einem Drehstab (3), mit folgenden Schritten:
- Fertigung der Eingangswelle (1) und/oder der Ritzelwelle (2) mit einer Bohrung (9, 10), die zur Verbindung mit dem Drehstab (3) vorgesehenen ist,
**dadurch gekennzeichnet, dass**
- die Bohrung (9, 10) mit einem Untermaß gegenüber dem Außendurchmesser des Drehstabs (3) angefertigt wird,
- wobei das Untermaß so gewählt ist, das der Drehstab (3) bei Erhitzung der Eingangswelle (1) und/oder der Ritzelwelle (2) oder bei Abkühlung des Drehstabs (3) in die Bohrung (9, 10) einführbar ist und nach dem Temperaturausgleich zwischen der Eingangswelle (1) und/oder der Ritzelwelle (2) und dem Drehstab (3) der Drehstab (3) mit einer Presspassung in der Bohrung (9, 10) sitzt;
- Erzeugen eines Temperaturunterschiedes, wobei der Drehstab (3) kälter ist als die Eingangswelle (1) und/oder die Ritzelwelle (2),
- Fügen der Eingangswelle und/oder der Ritzelwelle und des Drehstabs, sowie
- Herbeiführen eines Temperaturausgleichs zwischen der Eingangswelle (1) und/oder der Ritzelwelle (2) und dem Drehstab (3).

2. Verfahren nach Anspruch 1, **dadurch gekennzeichnet, dass** die Bohrung (9) der Eingangswelle (1) und/oder die Bohrung (10) der Ritzelwelle (2) eine kreisrunde Bohrung ist.

3. Verfahren nach einem der vorhergehenden Ansprüche,
**dadurch gekennzeichnet, dass** der Endbereich des Drehstabs (3) einen zylindrischen, kreisrunden Querschnitt aufweist.

4. Verfahren nach einem der vorhergehenden Ansprüche,
**dadurch gekennzeichnet, dass** die Baugruppe vor dem Temperaturausgleich justiert wird.

5. Verfahren nach einem der vorhergehenden Ansprüche,
**dadurch gekennzeichnet, dass** der Drehstab (3) ein Stab mit über die Länge konstantem Durchmesser ist.

6. Verfahren nach einem der vorhergehenden Ansprüche,
**dadurch gekennzeiehnet,** dass die Temperaturdifferenz während des Fügens zwischen der Eingangswelle oder der Ritzelwelle und dem Drehstab bei der Fertigung etwa 200 bis 300°C beträgt.

7. Verfahren nach einem der vorhergehenden Ansprüche,
**dadurch gekenntzeichnet,** dass die Eingangswelle oder die Ritzelwelle induktiv erhitzt werden.

8. Verfahren nach einem der vorhergehenden Ansprüche,
**dadurchgekennzeiehnet** dass der Drehstab (3) beispielsweise durch Anwendung von flüssigem Stickstoff abgekühlt wird.

9. Verfahren nach einem der vorhergehenden Ansprüche,
**dadurch gekennzeichnet, dass** die Bohrung (9) zur Befestigung des Drehstabs (3) in der Eingangswelle (1) als Sackbohrung ausgeführt ist.

## Claims

1. A method for producing an assembly for a motor vehicle servo steering system consisting of input shaft and pinion shaft with a torsion bar (3), having the following steps:
- manufacturing the input shaft (1) and/or of the pinion shaft (2) with a bore (9, 10), which is provided for connection to the torsion bar (3), **characterised in that**
- the bore (9, 10) is manufactured with an undersize compared with the outer diameter of the torsion bar (3),
- wherein the undersize is selected such that the torsion bar (3) can be introduced into the bore (9, 10) when the input shaft (1) and/or pinion shaft (2) is heated or when the torsion bar (3) is cooled, and the torsion bar (3) fits with a press fit in the bore (9, 10) after the temperature equalisation between the input shaft (1) and/or the pinion shaft (2) and the torsion bar (3);
- generating a temperature difference, the torsion bar (3) being cooler than the input shaft (1) and/or pinion shaft (2),
- joining the input shaft and/or the pinion shaft and the torsion bar, and
- effecting a temperature equalisation between the input shaft (1) and/or the pinion shaft (2) and the torsion bar (3).

2. The method according to Claim 1, **characterised in that** the bore (9) of the input shaft (1) and/or the bore (10) of the pinion shaft (2) is a circular bore.

3. The method according to one of the preceding claims, **characterised in that** the end region of the torsion bar (3) has a cylindrical, circular cross section.

4. The method according to one of the preceding claims, **characterised in that** the assembly is adjusted before temperature equalisation.

5. The method according to one of the preceding claims, **characterised in that** the torsion bar (3) is a bar having a diameter that is constant over its length.

6. The method according to one of the preceding claims, **characterised in that** the temperature difference during joining between the input shaft or the pinion shaft and the torsion bar is approximately 200 to 300°C during manufacture.

7. The method according to one of the preceding claims, **characterised in that** the input shaft or the pinion shaft are heated inductively.

8. The method according to one of the preceding claims, **characterised in that** the torsion bar (3) is cooled for example with the use of liquid nitrogen.

9. The method according to one of the preceding claims, **characterised in that** the bore (9) for fastening the torsion bar (3) in the input shaft (1) is formed as a blind bore.

## Revendications

1. Procédé de fabrication d'un module pour une direction assistée de véhicule automobile constituée d'un arbre d'entrée et d'un arbre de pignon, comportant une barre de torsion (3), comportant les étapes suivantes consistant à :
- fabriquer de l'arbre d'entrée (1) et/ou de l'arbre de pignon (2) avec un alésage (9, 10), qui est prévu afin de relier à la barre de torsion (3),
**caractérisé en ce que**
- l'alésage (9, 10) est fabriqué avec une sous-cote par rapport au diamètre extérieur de la barre de torsion (3),
- dans lequel la sous-cote est sélectionné de telle sorte que la barre de torsion (3) lors du chauffage de l'arbre d'entrée (1) et/ou de l'arbre de pignon (2) ou lors du refroidissement de la barre de torsion (3) peut être insérée dans l'alésage (9, 10) et après une compensation de température entre l'arbre d'entrée (1) et/ou l'arbre de pignon (2) et la barre de torsion (3), la barre de torsion (3) vient reposer avec un ajustement par pression dans l'alésage (9, 10) ;
- générer une différence de température, dans lequel la barre de torsion (3) est plus froide que l'arbre de sortie (1) et/ou l'arbre de pignon (2),
- assembler l'arbre d'entrée et/ou l'arbre de pignon et la barre de torsion, ainsi que
- provoquer une compensation de température entre l'arbre d'entrée (1) et/ou l'arbre de pignon (2) et la barre de torsion (3).

2. Procédé selon la revendication 1, **caractérisé en ce que** l'alésage (9) de l'arbre d'entrée (1) et/ou l'alésage (10) de l'arbre de pignon (2) est un alésage sphérique.

3. Procédé selon une des revendications précédentes, **caractérisé en ce que** la zone d'extrémité de la barre de torsion (3) présente une section transversale sphérique, cylindrique.

4. Procédé selon une des revendications précédentes, **caractérisé en ce que** le module est ajusté par la compensation de température.

5. Procédé selon une des revendications précédentes, **caractérisé en ce que** la barre de torsion (3) est une barre avec un diamètre constant sur la longueur.

6. Procédé selon une des revendications précédentes, **caractérisé en ce que** la différence de température pendant l'assemblage entre l'arbre d'entrée ou l'arbre d pignon et la barre de torsion lors de la fabrication est comprise entre environ 200 et 300°C.

7. Procédé selon une des revendications précédentes, **caractérisé en ce que** l'arbre d'entrée ou l'arbre de pignon sont chauffés de manière inductive.

8. Procédé selon une des revendications précédentes, **caractérisé en ce que** la barre de torsion (3) est refroidie par exemple en employant de l'azote liquide.

9. Procédé selon une des revendications précédentes, **caractérisé en ce que** l'alésage (9) est conçu afin de fixer la barre de torsion (3) dans l'arbre d'entrée (1) comme un alésage borgne.
